# EUROPÄISCHE PATENTSCHRIFT

(11) **EP 4 460 959 B1**
(45) Veröffentlichungstag und Bekanntmachung des Hinweises auf die Patenterteilung: **05.03.2025**
(21) Anmeldenummer: 24708401.5
(22) Anmeldetag: 27.02.2024
(51) Int. Cl.: H04M 1/60, H04R 3/00

(54) **VERFAHREN ZUR STEUERUNG EINER KOMMUNIKATIONSWIEDERGABE ZWISCHEN EINER FREISPRECHEINRICHTUNG IN EINEM KRAFTWAGEN UND EINEM NUTZER SOWIE FREISPRECHEINRICHTUNG**
METHOD FOR CONTROLLING A COMMUNICATION RELAY BETWEEN A HANDS-FREE DEVICE IN A MOTOR VEHICLE AND A USER, AND HANDS-FREE DEVICE
PROCÉDÉ DE COMMANDE D'UN RELAIS DE COMMUNICATION ENTRE UN DISPOSITIF MAINS LIBRES DANS UN VÉHICULE AUTOMOBILE ET UN UTILISATEUR, ET DISPOSITIF MAINS LIBRES

(30) Priorität: 20.03.2023 DE 102023001073
(43) Veröffentlichungstag der Anmeldung: 13.11.2024
(73) Patentinhaber: Mercedes-Benz Group AG, 70372 Stuttgart (DE)
(72) Erfinder: BENDICK, Jan, 71032 Böblingen (DE); HANUSCHKIN, Alexander, 76133 Karlsruhe (DE)
(74) Vertreter: Novagraaf Group
(86) Internationale Anmeldenummer: PCT/EP2024/055014
(87) Internationale Veröffentlichungsnummer: WO 2024/193957

(56) Entgegenhaltungen:
- WO-A2-2016/020511
- GB-A- 2 565 518
- JP-B2- 6 957 362
- US-A1- 2015 137 998
- US-A1- 2021 166 673
- US-A1- 2022 080 965
- US-B1- 10 440 467
- US-B2- 9 870 764
- JING LIU ET AL: "Research on SiGeC power diodes with fast and soft recovery", SOLID-STATE AND INTEGRATED-CIRCUIT TECHNOLOGY, 2008. ICSICT 2008. 9TH INTERNATIONAL CONFERENCE ON, IEEE, PISCATAWAY, NJ, USA, 20 October 2008 (2008-10-20), pages 180 - 183, XP031384222, ISBN: 978-1-4244-2185-5, DOI: 10.1109/ICSICT.2008.4734503

## Beschreibung

Die Erfindung betrifft ein Verfahren zur Steuerung einer Kommunikationswiedergabe zwischen einer Freisprecheinrichtung in einem Kraftwagen und einem Nutzer gemäß Patentanspruch 1. Ferner betrifft die Erfindung eine solche Freisprecheinrichtung.

Eine Freisprecheinrichtung im Kraftwagen stellt die Möglichkeit dar, ohne das Anwenden eines mobilen Endgeräts oder eines Mobiltelefons, eine Kommunikationswiedergabe beziehungsweise ein Gespräch zu führen. Insbesondere sollen mögliche Unfallsituationen dadurch verhindert werden, die aufgrund einer Unaufmerksamkeit des Fahrers während des Haltens des Mobiltelefons entstehen könnten. Hierbei sind Maßnahmen zum Schutz der Kommunikationswiedergabe vorgesehen, beispielsweise durch Anwendung sicherer Verbindungen und durch Geräuschunterdrückungsfunktionen sowie durch Positionierungen jeweiliger Komponenten der Freisprecheinrichtung.

Aus der US 2015/0137998 A1 ist ein Kraftfahrzeug-Audiosystem offenbart, umfassend einen Audio-Detektor zur Erfassung von Umgebungsgeräusche außerhalb eines Fahrzeugs und ein Audioverarbeitungsmodul, um die Umgebungsgeräusche zu verarbeiten und daraus ein Ereignis außerhalb des Fahrzeugs zu identifizieren. In Abhängigkeit des Ereignisses wird dem Insassen eine Warnung bereitgestellt.

Aus der GB 2565518 A ist noch ein nennungswürdiges In-Fahrzeug-Privatsphäre-System offenbart.

In der US 2022/080965 A1 wird ein offenes Fahrzeug beschrieben, welches in einem Automatikmodus mittels eines externen Sensors eine Person im Außenbereich des Fahrzeugs erkennt und bei Unterschreiten eines vordefinierten Grenzwertes für den Abstand zwischen Person und Fahrzeug dieses von der Person weglenkt, um den Abstand zu dieser zu vergrößern.

Die JP 6 957362 B2 offenbart ein System zum Schutz der Privatsphäre, welches die Verständlichkeit einer Audioausgabe einer Freisprecheinrichtung eines Fahrzeuges im Außenbereich des Fahrzeuges durch die Ausgabe eines Maskierungsgeräusches reduziert, wenn durch ein Mikrofon eine Überschreitung einer Grenzlautstärke im Außenbereich erfasst wird.

Aus der US 10 440 467 B1 ist eine Sprachmaskierungstechnologie beschrieben, welche es ermöglicht, dass nur ein bestimmter Fahrzeuginsasse unter mehreren Fahrzeuginsassen in dem Fahrzeug ein Sprachkommunikationssignal, etwa einen Wählton, hören kann, wobei die Technologie verhindert, dass die übrigen Fahrzeuginsassen neben dem bestimmten Fahrzeuginsassen das Sprachkommunikationssignal hören.

Es besteht jedoch weiterhin das Problem, dass bei laufender Freisprecheinrichtung die Geräuschunterdrückung vom Innenraum des Kraftwagens in eine Umgebung des Kraftwagens nicht ausreichend ausgeführt ist, um das Mithören Dritter in einer unmittelbaren Umgebung des Kraftwagens zu verhindern.

Aufgabe der Erfindung ist es ein Verfahren sowie eine Freisprecheinrichtung bereitzustellen, mittels welchen eine Geräuschunterdrückung der Freisprecheinrichtung von einem Innenraum des Kraftwagens in eine Umgebung des Kraftwagens besonders effizient gestaltet wird.

Diese Aufgabe wird mittels eines erfindungsgemäßen Verfahrens mit den Merkmalen des Patentanspruchs 1 sowie mittels einer erfindungsgemäßen Freisprecheinrichtung gelöst. Vorteilhafte Ausgestaltungen des erfindungsgemäßen Verfahrens sind als vorteilhafte Ausführungsformen der erfindungsgemäßen Freisprecheinrichtung anzusehen, wobei die Freisprecheinrichtung insbesondere Mittel zur Durchführung der Verfahrensschritte umfasst. Vorteilhafte Weiterbildungen der Erfindung sind durch die abhängigen Patentansprüche, die folgende Beschreibung sowie die Figuren beschrieben.

Ein erster Aspekt der Erfindung betrifft ein Verfahren zur Steuerung einer Kommunikationswiedergabe zwischen einer Freisprecheinrichtung in einem Kraftwagen und einem Nutzer, bei welchem für die Kommunikationswiedergabe mittels einer mit der Freisprecheinrichtung elektronisch gekoppelten Steuereinrichtung wenigstens ein mit der Freisprecheinrichtung elektronisch gekoppelter Lautsprecher, insbesondere eine Vielzahl von mit der Freisprecheinrichtung elektronisch gekoppelten Lautsprechern gesteuert werden. Hierbei ist es vorgesehen, dass jeweilige von den jeweiligen Lautsprechern ausgehenden Schallsignale für die Kommunikationswiedergabe geändert werden.

Um die Aufgabe der Erfindung zu lösen und somit Verfahren bereitzustellen, mittels welchem eine Geräuschunterdrückung der Freisprecheinrichtung vom Innenraum des Kraftwagens in eine Umgebung des Kraftwagens besonders effizient gestaltet wird, ist es erfindungsgemäß vorgesehen, eine Vielzahl von folgend beschriebenen Verfahrensschritten durchzuführen.

In einem ersten Verfahrensschritt ist ein Erfassen von Parametern zur Ermittlung eines Fahrzeugnutzungskontexts mittels wenigstens einer mit der Freisprecheinrichtung elektronisch gekoppelten ersten Erfassungseinrichtung vorgesehen. Somit wird während eines Telefonates über die Freisprecheinrichtung des Kraftwagens, zu diesem Zweck der Fahrzeugnutzungskontext, nämlich beispielweise eine Fahrt über die Autobahn, Warten an einer roten Ampel, Parken vor dem Freibad, ein offenes Schiebedach oder Seitenfenster, etc. über die im Kraftwagen verbaute Erfassungseinrichtung ermittelt. Beispielsweise wird auch bei der Annahme oder dem Führen des Telefonats die Geschwindigkeit und die Geoposition des Fahrzeuges erfasst. Befindet sich das Fahrzeug mit hoher Geschwindigkeit in einem nur wenig besiedelten Gebiet, kann davon ausgegangen werden, dass das Telefonat nicht von einem zufälligen Beistehenden mitgehört werden kann, da dieser das Fahrzeug nur für einen kurzen Zeitraum sehen und hören kann. Andererseits, befindet sich ein langsames oder ruhendes Fahrzeug mit geöffnetem Schiebedach in der Nähe eines Freibades oder Marktplatzes kann von vielen zufälligen Beistehenden die über einen langen Zeitraum das Telefonat mithören können ausgegangen werden.

In einem zweiten Verfahrensschritt ist in Abhängigkeit von den Parametern des Fahrzeugkontexts, ein Erfassen von einer Person in einer Umgebung, insbesondere in einer unmittelbaren Umgebung, des Kraftwagens mittels wenigstens einer mit der Freisprecheinrichtung elektronisch gekoppelten zweiten Erfassungseinrichtung vorgesehen. Somit wird zusätzlich zu dem Fahrzeugnutzungskontext noch ein potenzieller Mithörerkontext ermittelt. Dieser Mithörerkontext kann im Besonderen von der zu erwartenden Dichte von Personen an einem bestimmten Ort und im Besonderen von Uhrzeit, Wochentag, Wetter usw. abhängig sein. Dieser Mithörerkontext kann aus der im Fahrzeug verbauten zweiten Erfassungseinrichtung ermittelt werden.

In einem dritten Verfahrensschritt ist ein Erfassen einer Position der Person relativ zum Kraftwagen vorgesehen. Somit können neben dem potentiellen Mithörerkontext Personen und deren Positionen im direkten Umfeld des Kraftwagens mittels der zweiten Erfassungseinrichtung erfasst werden.

In einem vierten Verfahrensschritt ist in Abhängigkeit von der erfassten Position, eine Änderung einer Lautstärke und/oder eine Güte einer Sprachverständlichkeit des von dem wenigstens einen Lautsprecher ausgehenden und wenigstens teilweise an die Position der Person gerichteten Schallsignals mittels der Steuereinrichtung vorgesehen. Beispielsweise wird mittels der zweiten Erfassungseinrichtung die Position einer in der Umgebung des Kraftwagens stehenden Person erfasst und die Positionsdaten an die Steuereinrichtung übermittelt. Die Steuereinrichtung ist nun dazu ausgebildet, die jeweiligen Lautsprecher, deren Schallsignal wenigstens teilweise in Richtung der Position ausgerichtet sind, derart zu steuern, dass diese Schallsignale in ihrer Lautstärke wenigstens teilweise reduziert werden. Durch diese Maßnahmen können die Schallsignale so reduziert werden, dass die Person in der Umgebung des Kraftwagens die Kommunikationswiedergabe im Wesentlichen nicht mithören kann, da eine gerichtete Geräuschreduzierung in Abhängigkeit der Position der Person durchgeführt wird.

Die Klangqualität und Lautstärke des Schallsignals, das von dem Lautsprecher erzeugt wird soll somit geändert werden. Ein gutes Sprachverständlichkeitssystem sollte eine klare, deutliche und gut hörbare Sprachausgabe bereitstellen, hierbei ist es jedoch vorgesehen, genau diese Sprachausgabe in Abhängigkeit der Position der Person so zu verändern, dass diese Person möglichst wenig oder möglichst ungenau hören kann, welche Sprachausgaben durch die Lautsprecher ausgehen. Hierfür werden die Schallsignale in Richtung der Person wenigstens teilweise geändert. Insbesondere können somit bestimmte Bereiche im Innenraum des Kraftwagens besonders stark beschallt und anderen Bereiche im Innenraum besonders schwach beschallt werden. Die Freisprecheinrichtung weist somit eine Raumverstellungsmöglichkeit auf, mittels welcher die Audioqualität und der Komfort während eines Gesprächs und somit während der Kommunikationswiedergabe verbessert wird, insbesondere indem sie sich an die akustischen Bedingungen des Innenraums anpasst.

In einer vorteilhaften Ausgestaltung der Erfindung ist es vorgesehen, dass die erste Erfassungseinrichtung als optische Erfassungseinrichtung und/oder die zweite Erfassungseinrichtung als optische Erfassungseinrichtung bereitgestellt werden. Insbesondere kann somit die erste Erfassungseinrichtung als eine Innenkamera und die zweite Erfassungseinrichtung als eine Außenkamera ausgebildet sein, wodurch jeweilige Aufnahmen aus dem Innenraum und Aufnahmen aus der Umgebung erfasst werden und an die Steuereinrichtung zur Analyse übermittelt werden, wobei die Steuereinrichtung beispielsweise als elektronische Recheneinrichtung ausgebildet ist, und mittels Software oder Algorithmen die Aufnahmen analysiert, um die jeweiligen Parameter oder Positionen der Personen in der Umgebung der Kraftwagens zu erfassen. In Abhängigkeit der erfassten Daten und Parameter kann die Steuereinrichtung weitere Maßnahmen zur Schallreduzierung vornehmen. Beispielsweise wird mit einer Außenkamera des Fahrzeuges eine Aufnahme einer auf dem Gehweg rechts neben dem parkenden Kraftwagen befindlichen Person aufgezeichnet. Die Bilddaten werden in der elektronischen Recheneinrichtung oder in einem Steuergerät des Kraftwagens ausgewertet und zum Beispiel mit Methoden des computergestützten Sehens (CV) pixelgenau einer Objektklasse zugeordnet. Somit ist es möglich eine Person in der Aufnahme zu erkennen und zu lokalisieren.

In noch einer vorteilhaften Ausgestaltung der Erfindung ist es vorgesehen, dass die erste Erfassungseinrichtung als Sensoreinrichtung und/oder die zweite Erfassungseinrichtung als Sensoreinrichtung bereitgestellt werden. Beispielsweise können beide Erfassungseinrichtungen als Mikrophone, ADAS Signal-Empfänger, Sensoreinrichtungen mit Bewegungssensoren ausgebildet sein, welche die Stellung von Fenster und Schiebedach erfassen, Geschwindigkeit des Fahrzeuges, sowie Personen in der Umgebung erfassen.

In noch einer weiteren vorteilhaften Ausgestaltung der Erfindung ist es vorgesehen, dass mittels der zweiten Erfassungseinrichtung eine Trajektorie aus einer Positionsänderung einer Person in der Umgebung des Kraftwagens erfasst wird. Neben dem potenziellen Mithörerkontext können Personen im direkten Umfeld des Fahrzeuges mit der beispielsweise als Sensoreinrichtung mit einer Außensensorik des Kraftwagens ausgebildeten zweiten Erfassungseinrichtung erfasst werden, insbesondere unter Anwendung weiterer angeordneter Komponenten für eine effizientere Erfassung von Parameter und Positionen, beispielweise mittels Kameras, LiDAR, Radar, Ultraschall, usw. Es ist vorgesehen, somit die Person und die Trajektorie aus der Positionsänderung zu erfassen und somit zu jedem Zeitpunkt die Positionen der Personen in der insbesondere unmittelbaren Umgebung des Kraftwagens relativ zur Fahrzeugorientierung zu ermitteln. Dadurch kann die Steuereinrichtung kontinuierlich die Steuerung der Schallreduzierung in Abhängigkeit von der sich bewegenden Person durchführen. Bei einer optischen Erfassungseinrichtung als die zweite Erfassungseinrichtung ist es mögliche, aus einer Abfolge von zeitlich hintereinander aufgenommenen Aufnahmen/Kamerabilder die Bewegung der Person relativ zum Kraftwagen, das heißt relativ zur Kameraorientierung, welche fest zur Fahrzeugorientierung ist, zu bestimmen.

Ebenso vorteilhaft hat sich eine Ausgestaltung der Erfindung erwiesen, in welcher die Steuereinrichtung mit einem Datenzentrum kabellos gekoppelt wird. Dadurch kann neben dem Fahrzeugnutzungskontext noch ein potenzieller Mithörerkontext ermittelt werden, wobei beispielsweise Daten von einer zu erwartenden Dichte von Personen an einem bestimmten Ort sowie Daten wie Uhrzeit, Wochentag, Wetter usw. erfasst werden. Dieser Mithörerkontext kann hierbei aus einem zentralen Datenzentrum über eine drahtlose Datenkommunikationseinrichtung an den Kraftwagen übermittelt werden. Somit kann beispielsweise ermittelt werden, dass das Wetter aufgrund des Sonnenscheins und hoher Temperaturen gut ist und dass es sich um einen Sonntag handelt, wodurch ein besonders hohes Personenaufkommen definiert wird und eine besonders starke Geräuschreduzierung benötigt wird.

Auch vorteilhaft hat sich eine Ausgestaltung der Erfindung erwiesen, in welcher mittels einer dritten Erfassungseinrichtung eine weitere Lautstärke und/oder eine weitere Güte der Sprachverständlichkeit in der Umgebung des Kraftwagens erfasst wird. Hierbei ist die dritte Erfassungseinrichtung beispielweise als Außenmikrophon ausgebildet oder weist eine Vielzahl von Außenmikrophone auf. Die Außenmikrophone am Kraftwagen können den von innen nach außen strahlenden Schall erfassen und der resultierende Schalldruckpegel sowie die Sprachverständlichkeit kann durch die Streureinrichtung oder elektronische Recheneinrichtung aufgezeichnet beziehungsweise ermittelt werden. Beispielsweise kann die Sprachverständlichkeit mit einem unterschwelligen STIPA-Testsignal (Speech Transmission Index for Public Address Systems) ausgemessen werden, indem eine Amplitudenmodulation von Rauschen in einem Frequenzbereich von beispielweise 125 Hz - 10 kHz durchgeführt wird und aus einem Verlust einer Modulationstiefe im aufgezeichneten Außenmikrophonsignal auf eine reduzierte Sprachverständlichkeit geschlossen, beziehungsweise quantifiziert werden.

Zusätzlich hat sich als vorteilhafte Ausgestaltung der Erfindung erwiesen, dass die Schallsignale in Abhängigkeit von der erfassten weiteren Lautstärke und/oder der erfassten weiteren Güte der Sprachverständlichkeit in der Umgebung des Kraftwagens mittel der Steuereinrichtung wenigstens teilweise geändert werden. Insbesondere kann auch eine Regelung der Freisprecheinrichtung durchgeführt werden. Die Regelung hängt hierbei von verschiedenen Faktoren ab, wie zum Beispiel der Art des Kraftwagens, der Freisprecheinrichtung und den persönlichen Einstellungen des Nutzers. Die Steuereinrichtung als Lautstärkeregler und/oder als Güteregler wird somit zwar von dem Nutzer über beispielsweise das Lenkrad gesteuert, die dritte Erfassungseinrichtung erfasst die Lautstärke und/oder die Güte der Sprachverständlichkeit nach Außen und übermittelt wenigstens ein Signal an die Steuereinrichtung, um in Abhängigkeit der erfassten Position oder Trajektorie einer Person in der Umgebung, die Lautstärke wenigstens teilweise zu reduzieren und/oder die Güte der Sprachverständlichkeit wenigstens teilweise zu ändern. Insbesondere kann auch über einen Equalizer die Frequenz derart geregelt werden, dass der in die Umgebung gelangender Schall wenigstens teilweise reduziert wird. Zum Beispiel können Frequenzbänder selektiv in der Frequenz angehoben oder Reduziert werden.

Ebenso vorteilhaft hat sich eine Ausgestaltung der Erfindung erwiesen, in welcher mittels einer vierten Erfassungseinrichtung individuelle Nutzer erfasst werden. Die individuellen Nutzer des Fahrzeuges können durch vielfältige Methoden wie zum Beispiel durch Bildaufnahmen aus eine als Innenraumkamera ausgebildeten vierten Erfassungseinrichtung identifiziert oder erfasst werden. Weitere gängige Methoden sind zum Beispiel eine Gesichtserkennung durch maschinelles Sehen (engl.) "Computer Vision", durch personalisierte Fahrzeugschlüssel als die vierte Erfassungseinrichtung, oder einem persönlichen PIN Code, sodass die aufgezeichneten Daten des Nutzers oder eines Beifahrers eindeutig einer Person zugeordnet werden können. Somit können physiologischen und fahrspezifischen Merkmalswerte/-daten im Kraftwagen, über die im Kraftwagen verbauten vierten Erfassungseinrichtung erfasst werden, verarbeitet und einer individuellen Person zugeordnet werden. Beispielweise können die möglichen Änderungen der Sprachverständlichkeit von dem Nutzer im Inneren abhängig gemacht werden, wobei bei einem jungen Nutzer andere Frequenzen verändert werden als bei älteren Nutzer,

Schließlich ist es in einer weiteren vorteilhaften Ausgestaltung der Erfindung vorgesehen, dass die Schallsignale in Abhängigkeit von Daten des erfassten individuellen Nutzers mittel der Steuereinrichtung wenigstens teilweise gesteuert werden. Durch das Nutzen von Informationen über den Nutzer beziehungsweise Fahrer oder Beifahrer, zum Beispiel über die als Innenraumsensorik ausgebildete vierte Erfassungseinrichtung, kann ein Nutzerprofil ermittelt oder erweitert werden, um eine nutzerabhängige Veränderung des Schallsignals vorzunehmen, um die Privatsphäre zu schützen. Beispielsweise kann das Alter oder der Klangcharakter des Nutzers aus den Nutzerprofil abgefragt oder aus den Innenraumkamerabildern annäherungsweise bestimmt werden und Einstellungen zur Unterstützung der Person gesteuert werden.

Ein zweiter Aspekt betrifft eine Freisprecheinrichtung für einen Kraftwagen mit einer elektronisch gekoppelten Steuereinrichtung zur Steuerung einer Kommunikationswiedergabe zwischen der Freisprecheinrichtung und einem Nutzer, welche wiederum dazu ausgebildet ist, eine Vielzahl von mit der Freisprecheinrichtung elektronisch gekoppelten Lautsprechern und jeweilige Lautstärken der von den jeweiligen Lautsprechern ausgehenden Schallsignale für die Kommunikationswiedergabe wenigstens teilweise zu steuern. Es ist vorgesehen, dass mittels wenigstens einer mit der Freisprecheinrichtung elektronisch gekoppelten ersten Erfassungseinrichtung Parameter zur Ermittlung eines Fahrzeugnutzungskontexts erfassbar sind und mittels wenigstens einer mit der Freisprecheinrichtung elektronisch gekoppelten zweiten Erfassungseinrichtung und in Abhängigkeit von den Parametern des Fahrzeugkontexts eine Person in einer Umgebung des Kraftwagens und eine Position der Person relativ zum Kraftwagen erfassbar ist und mittels der Steuereinrichtung und in Abhängigkeit von der Position die Lautstärke der von den Lautsprechern ausgehenden und wenigstens teilweise an die Position der Person gerichteten Schallsignale reduzierbar sind. Beispielsweise ist es vorgesehen, dass die erste Erfassungseinrichtung als optische Erfassungseinrichtung und/oder die zweite Erfassungseinrichtung als optische Erfassungseinrichtung ausgebildet sind. Alternativ ist es vorgesehen, dass die erste Erfassungseinrichtung als Sensoreinrichtung und/oder die zweite Erfassungseinrichtung als Sensoreinrichtung ausgebildet sind. Es ist möglich, dass mittels der zweiten Erfassungseinrichtung eine Trajektorie aus einer Positionsänderung einer Person in der Umgebung des Kraftwagens erfassbar ist. Auch ist es möglich, dass die Steuereinrichtung mit einem Datenzentrum kabellos koppelbar ist, insbesondere um Umgebungsdaten der Umgebung zu erfassen. Mittels einer dritten Erfassungseinrichtung ist eine Lautstärke in der Umgebung des Kraftwagens erfassbar, wodurch die Schallsignale in Abhängigkeit von der erfassten Lautstärke in der Umgebung des Kraftwagens mittels der Steuereinrichtung wenigstens teilweise steuerbar sind. Mittels einer vierten Erfassungseinrichtung ist ein individueller Nutzer erfassbar, wodurch die Schallsignale in Abhängigkeit von Daten des erfassten individuellen Nutzers mittels der Steuereinrichtung wenigstens teilweise steuerbar sind.

In anderen Worten ist es mittels des beschriebenen Verfahrens und mittels der beschriebene Freisprecheinrichtung in einem Fahrzeug möglich, das äußere Mithören von Gesprächen, welche über die Freisprecheinrichtung im Fahrzeug geführt wird, zu verhindern oder zumindest die Sprachverständlichkeit außerhalb des Fahrzeuges derart zu reduzieren, dass ein Mithören des Gespräches im unmittelbaren Fahrzeugumfeld erheblich erschwert wird. Somit erlaubt der erfindungsgemäße Gegenstand die Privatsphäre von Fahrern und Mitfahrenden zu steigern und somit das Luxusempfinden im Fahrzeug durch digitale Mittel zu steigern (engl. "digital luxury").

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: ein erstes Bilddiagramm zur Veranschaulichung einer ersten Ausgestaltung eines Verfahrens zur Steuerung einer Kommunikationswiedergabe zwischen einer Freisprecheinrichtung in einem Kraftwagen und einem Nutzer unter Anwendung eines Datennetzes;
- Fig. 2: ein zweites Bilddiagramm zur Veranschaulichung einer zweiten Ausgestaltung des Verfahrens, wobei eine Position oder Trajektorie einer Person erfasst wird;
- Fig. 3: ein drittes Bilddiagramm zur Veranschaulichung einer dritten Ausgestaltung des Verfahrens unter Anwendung von Mikrophonen;
- Fig. 4: ein Ablaufdiagramm eines möglichen Ablaufs des Verfahrens; und
- Fig. 5: ein weiteres Ablaufdiagramm eines möglichen weiteren Ablaufs des Verfahrens.

In den Figuren sind gleiche und funktionsgleiche Elemente mit den gleichen Bezugszeichen versehen.

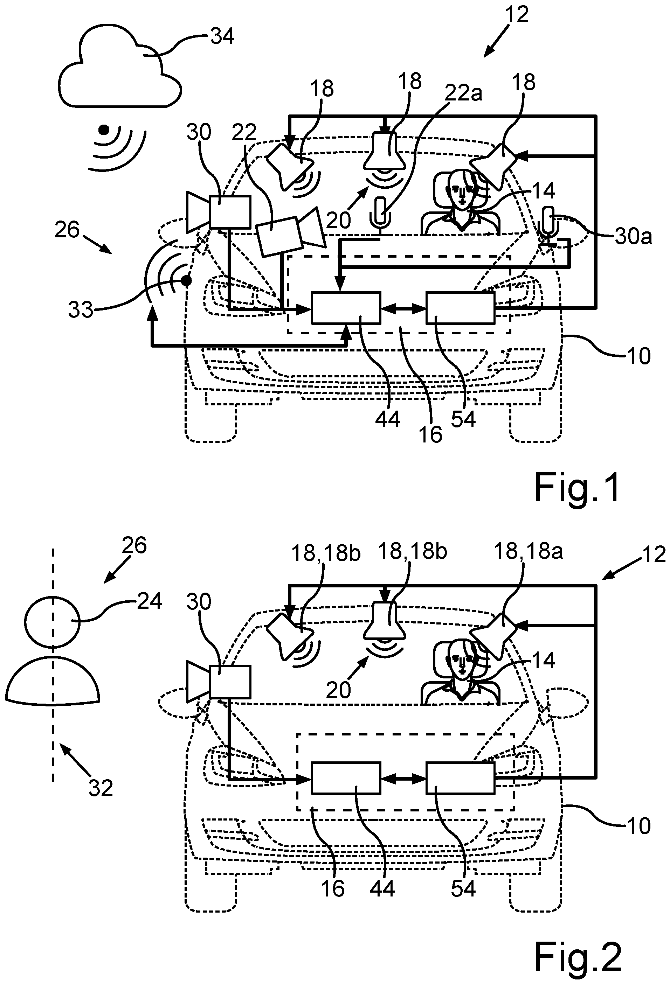

Fig. 1 zeigt ein erstes Bilddiagramm zur Veranschaulichung einer ersten Ausgestaltung eines Verfahrens zur Steuerung einer Kommunikationswiedergabe zwischen einer Freisprecheinrichtung 12 in einem Kraftwagen 10 und einem Nutzer 14. Hierbei ist es vorgesehen, dass mittels einer mit der Freisprecheinrichtung 12 elektronisch gekoppelten Steuereinrichtung 16 eine Vielzahl von mit der Freisprecheinrichtung 12 elektronisch gekoppelten Lautsprechern 18 und jeweilige Lautstärken und/oder Güten einer Sprachverständlichkeit der von den jeweiligen Lautsprechern 18 ausgehenden Schallsignale 20 für die Kommunikationswiedergabe wenigstens teilweise gesteuert und/oder geändert werden.

In einem ersten Verfahrensschritt S1 ist ein Erfassen von Parameter zur Ermittlung eines Fahrzeugnutzungskontexts mittels wenigstens einer mit der Freisprecheinrichtung 12 elektronisch gekoppelten ersten Erfassungseinrichtung 22 vorgesehen. Somit wird während der Nutzung der Freisprecheinrichtung 12 des Kraftwagens 10 der Fahrzeugnutzungskontext über die im Kraftwagen 10 verbaute erste Erfassungseinrichtung 22 und/oder über einer weitere am Kraftwagen 10 angeordnete zweite Erfassungseinrichtung 30 ermittelt. Auch Parameter wie die eines geöffneten Schiebedachs in der Nähe eines Freibades oder Marktplatze oder im Wald können erfasst werden. In einem weiteren zweiten Verfahrensschritt S2 ist in Abhängigkeit von den Parametern des Fahrzeugnutzungskontexts, ein Erfassen von einer Person 24 in einer Umgebung 26, insbesondere in einer unmittelbaren Umgebung 26, des Kraftwagens 10 mittels wenigstens einer mit der Freisprecheinrichtung 12 elektronisch gekoppelten zweiten Erfassungseinrichtung 30 vorgesehen. Somit wird zusätzlich zu dem Fahrzeugnutzungskontext noch ein potenzieller Mithörerkontext ermittelt. Dieser Mithörerkontext kann im Besonderen von der zu erwartenden Dichte von Personen 24 an einem bestimmten Ort und im Besonderen von Uhrzeit, Wochentag, Wetter usw. abhängig sein. In einem dritten Verfahrensschritt S3 ist ein Erfassen einer Position der Person 24 relativ zum Kraftwagen 10 vorgesehen. Somit können neben dem potenziellen Mithörerkontext Personen 24 und deren Positionen 32 in der Umgebung 26 des Kraftwagens 10 mittels der zweiten Erfassungseinrichtung 30 erfasst werden. In einem vierten Verfahrensschritt S4 ist in Abhängigkeit von der Position 32, eine Änderung, insbesondere ein Reduzieren der Lautstärke sowie eine Änderung der Güte der Sprachverständlichkeit der von den Lautsprechern 18 ausgehenden und wenigstens teilweise an die Position 32 der Person 24 gerichteten Schallsignale 20 mittels der Steuereinrichtung 16 vorgesehen. Beispielsweise wird mittels der zweiten Erfassungseinrichtung 30 die Position 32 einer in der Umgebung 26 des Kraftwagens 10 stehenden Person 24 erfasst und daraus resultierende Positionsdaten an die Steuereinrichtung 16 übermittelt. Die Steuereinrichtung 16 ist nun dazu ausgebildet, die jeweiligen Lautsprecher 18, deren Schallsignal 20 wenigstens teilweise in Richtung der Position 32 ausgerichtet sind, derart zu steuern, dass diese Schallsignale 20 in ihrer Lautstärke und Güte der Sprachverständlichkeit wenigstens teilweise reduziert werden. Durch diese Maßnahmen können die Schallsignale 20 so geändert werden, dass die Person 24 in der Umgebung 26 des Kraftwagens 10 die Kommunikationswiedergabe im Wesentlichen nicht mithören kann, da eine gerichtete Geräuschveränderung und/oder Geräuschreduzierung und/oder Güteänderung in Abhängigkeit der Position 32 der Person 24 mittels des Verfahrens durchgeführt wird.

Insbesondere wird somit in der Fig. 1 ein Kraftwagen 10 dargestellt, bei welchem die erste Erfassungseinrichtung 22 als optische Erfassungseinrichtung und/oder die zweite Erfassungseinrichtung 30 als optische Erfassungseinrichtung bereitgestellt werden, wodurch Kamerabilder mit der als Innenraumkamera ausgebildeten ersten Erfassungseinrichtung 22 von einem Nutzer/Fahrer 14 erfasst werden. Zudem werden von der Umgebung 26 mittels der als Außenkamera ausgebildeten zweiten Erfassungseinrichtung 30 erfasst. Die Aufnahmen werden an die Steuereinrichtung 16 zur Auswertung übermittelt, wobei die Steuereinrichtung als eine elektronische Recheneinrichtung ausgebildet sein kann oder mit einer solchen elektronisch gekoppelt sind oder eine solche aufweisen. Die Steuereinrichtung 16 erfasst somit den Fahrzeugnutzungskontext und den potentiellen Mithörerkontext sowie erkennt Personen 24 in der direkten Umgebung 26 sowie deren Position 32 relativ zum Fahrzeug. Zusätzlich bekommt die Steuereinrichtung 16 Informationen von Innenmikrophonen 22a und Außenmikrophonen 30a, um eine mögliche Regelung der Geräuschreduzierung und/oder der Güteänderung zu ermöglichen, auf die in den weiteren Figuren genauer eingegangen wird.

Die Steuereinrichtung 16 ist hierbei mit einem Datenzentrum 34 kabellos gekoppelt. Dadurch kann neben dem Fahrzeugnutzungskontext noch ein potenzieller Mithörerkontext ermittelt werden, wobei beispielsweise Daten von einer zu erwartenden Dichte von Personen 24 an einem bestimmten Ort sowie Daten wie Uhrzeit, Wochentag, Wetter usw. erfasst werden. Dieser Mithörerkontext kann hierbei aus einem zentralen Datenzentrum 34 über eine drahtlose Datenkommunikationseinrichtung 33 an den Kraftwagen 10 übermittelt werden.

Fig. 2 zeigt ein zweites Bilddiagramm zur Veranschaulichung einer zweiten Ausgestaltung des Verfahrens, wobei eine Position oder Trajektorie einer Person 24 erfasst wird. Hierbei wird mittels der zweiten Erfassungseinrichtung 30 die Position einer Person 24 oder die Trajektorie aus einer Positionsänderung einer Person 24 in der Umgebung 26 des Kraftwagens 10 erfasst, insbesondere unter Anwendung weiterer angeordneter Komponenten für eine effizientere Erfassung von Parameter und Positionen 32, beispielweise mittels Kameras, LiDAR, Radar, Ultraschall, usw. Es ist vorgesehen, somit die Person 24 und die Position oder Trajektorie aus der Positionsänderung zu erfassen und somit zu jedem Zeitpunkt die Positionen 32 der Personen in der insbesondere unmittelbaren Umgebung 26 des Kraftwagens 10 relativ zur Fahrzeugorientierung zu ermitteln. Dadurch kann die Steuereinrichtung 16 kontinuierlich die Steuerung der Schalländerung in Abhängigkeit von der ruhenden oder sich bewegenden Person 24 durchführen. Bei einer optischen Erfassungseinrichtung als die zweite Erfassungseinrichtung 30 ist es somit möglich, aus einer Abfolge von zeitlich hintereinander aufgenommenen Aufnahmen/Kamerabilder die Bewegung der Person 24 relativ zum Kraftwagen 10, das heißt relativ zur Kameraorientierung, welche fest zur Fahrzeugorientierung ist, zu bestimmen. In diesem in der Fig. 2 gezeigten Fall werden die fahrerseitigen Lautsprecher 18a lauter angesteuert als die weiteren Lautsprecher 18b, welche sich in der Nähe der Person 24, in diesem Fall die der Beifahrerseite und im mittleren Bereich des Kraftwagens 10 befinden.

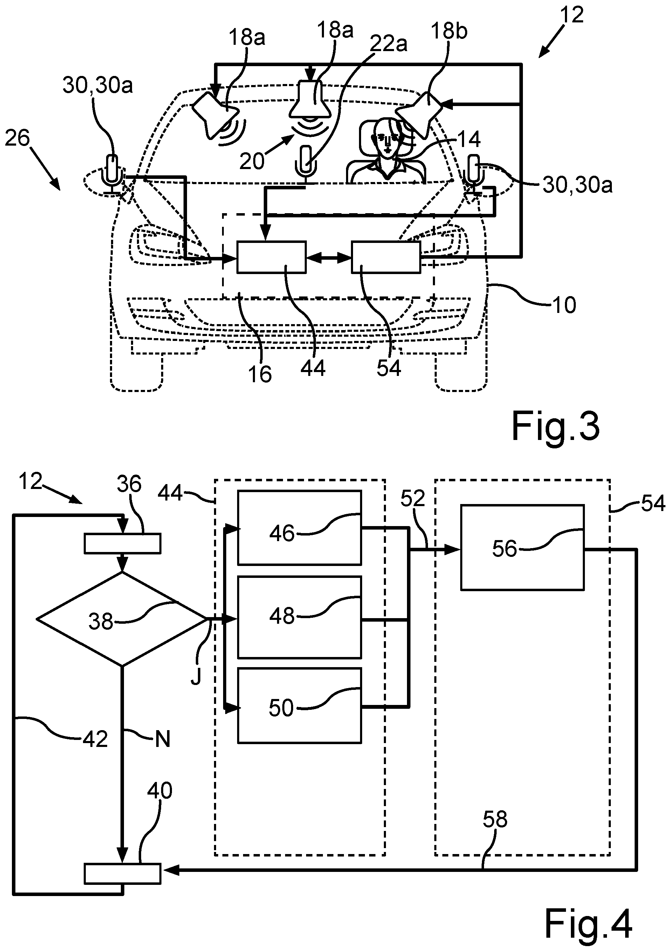

Fig. 3 zeigt ein drittes Bilddiagramm zur Veranschaulichung einer dritten Ausgestaltung des Verfahrens unter Anwendung von Mikrophonen. Insbesondere werden die erste Erfassungseinrichtung 22 und/oder die zweite Erfassungseinrichtung 30 als jeweilige Sensoreinrichtungen bereitgestellt, wobei die Sensoreinrichtungen beispielsweise ein jeweiliges Mikrophon aufweisen. Insbesondere empfängt somit die Steuereinrichtung 16 Informationen von Innenmikrophonen 22a und Außenmikrophonen 30a, um eine mögliche Regelung der Geräuschreduzierung zu ermöglichen. Somit wird ein Kraftwagen 10 dargestellt, bei welchem die Lautsprecher 18 Sprachnachrichten oder Telefonate wiedergeben, wobei die Schallsignale 20 wiederum außerhalb des Kraftwagens mittels der Außenmikrophone 30a aufgenommen werden und zur Auswertung an die Steuereinrichtung 16 übermittelt werden, wodurch auch ein Regelkreis möglich ist. Durch aufgenommene Schallsignale A, welche über einen Sollwert hinausgesehen, kann die Steuereinrichtung 16 eine gezielte Geräuschreduzierung durchführen.

Insbesondere werden mittels der Innenraumlautsprecher 18 wiedergegebene Sprachnachrichten oder Telefonate aufgezeichnet und mittels der Steuereinrichtung 16 analysiert beziehungsweise eine Sprachverständigkeit quantifiziert. So kann beispielsweise die Güte eines automatischen Transkripts beim Erstellen quantisiert werden, zum Beispiel durch eine Statistik über die Wahrscheinlichkeiten für das eindeutige Erkennen jeden einzelnen Wortes. Dies ergibt einen Wert Q1 für die im Fahrzeug quantisierte Sprachverständigkeit. Gleichzeitig wird die Sprachverständigkeit außerhalb des Fahrzeuges Q2 mittels der Außenmikrophone 30a ermittelt. Die Werte von Q1 und Q2 oder daraus ermittelte Werte wie beispielsweise das Verhältnis von Q1 zu Q2 wird der Steuereinrichtung 16 übermittelt, welche daraufhin die Lautsprecheransteuerung, d.h. das erzeugte Audiosignal beziehungsweise die Schallsignale A, dergestalt ändert, dass der Gesprächsinhalt im Inneren des Kraftwagens 10 maximal gut und im Außenbereich des Kraftwagens, nämlich in der Umgebung 26 minimal gut erkannt werden kann, beispielsweise könnte hierfür der Quotient Q1/Q2 maximiert werden.

Fig. 4 zeigt ein Ablaufdiagramm eines möglichen Ablaufs des Verfahrens, welcher nach einem Start 36 eine erste Abfrage 38 stellt, bei welcher abgefragt wird, ob ein Gespräch über die Lautsprecher 18 des Kraftwagens 10 wiedergegeben soll. Bei einem "Nein" N und somit bei einer Verneinung der ersten Abfrage 38 wird das Verfahren über einen Stop-Befehl 40 gestoppt und über eine erste Schleife 42 für den erneuten Start 36 bereitgestellt. Bei einem "Ja" J und somit bei einer Bestätigung der ersten Abfrage 38 werden ein in einer ersten insbesondere als elektronische Recheneinrichtung ausgebildete Steuereinrichtung 44 drei beispielhafte Befehle 46, 48, 50 ausgeführt, wobei mittels des ersten Befehls 46 das Ermitteln von Parametern in Abhängigkeit von dem Fahrzeugnutzungskontext aus Daten, die von der der beispielsweise als Sensoreinrichtung ausgebildeten ersten Erfassungseinrichtung 22 erfasst werden. Mittels eines zweiten Befehls 48 soll ein potenzieller Mithörerkontext ermittelt werden, in dem die als beispielsweise Außensensor ausgebildete zweite Erfassungseinrichtung 30 Umgebungsparameter wie Wetterdaten erfasst werden. Ebenso kann die Information von der mit der ersten Steuereinrichtung 44 kabellos gekoppelten Datenzentrum 34 empfangen werden und für die Geräuschreduzierung und/oder Güteänderung mitberücksichtigt werden. Mittels eines dritten Befehls 50 sollen nun die Personen 24 ermittelt werden, in dem die als beispielsweise Außensensor ausgebildete zweite Erfassungseinrichtung 30 die Position 32 der Person 24 in der Umgebung 26 des Kraftwagens 10 erfasst. Über eine Kombination der Daten und/oder Informationen und/oder der Parameter kann die als elektronische Recheneinrichtung ausgebildete Steuereinrichtung 44 einen vierten Befehl 52 an eine zweite Steuereinrichtung 54 übermitteln, um eine fahrzeugnutzungskontextabhängige Ansteuerung 56 der Lautsprecher 18 durchzuführen. Durch diese Maßnahmen können die Schallsignale 20 so reduziert werden, dass die Person 24 in der Umgebung 26 des Kraftwagens 10 die Kommunikationswiedergabe im Wesentlichen nicht mithören kann, da eine gerichtete Geräuschreduzierung und/oder Güteänderung in Abhängigkeit der Position 32 der Person 24 durchgeführt wird. Anschließend wird über eine zweite Schleife 58 das Verfahren wieder bei Start 36 von neuem angefangen.

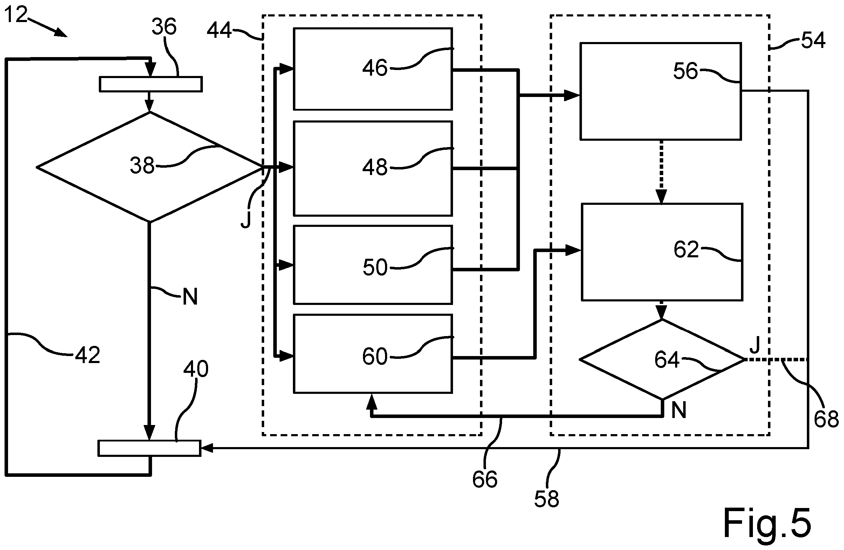

Fig. 5 zeigt ein weiteres Ablaufdiagramm eines möglichen weiteren Ablaufs des Verfahrens, wobei in der als elektronische Recheneinrichtung ausgebildeten ersten Steuereinrichtung 44 ein weiterer Befehl 60 vorgesehen ist, bei welchem eine Quantisierung einer Sprachinhaltserkennung wie in Fig. 3 beschrieben, ermittelt wird und wobei hierfür die Daten durch die Innen- und Außenmikrophone 22a, 30a der jeweiligen aufweisenden Erfassungseinrichtungen 14, 30 erfasst werden. Somit wird mittels der zweiten Steuereinrichtung 54 eine weitere Ansteuerung 62 der Lautsprecher 18 durchgeführt, um die Qualität der Schallsignale 20 nach Außen in die Umgebung 26 zu reduzieren als auch die Lautstärke und Güte. Im Kraftwagen 10 soll jedoch die Qualität der Schallsignale 20 beibehalten oder verbessert werden. Anschließend kommt eine weitere Abfrage 64, bei welcher abgefragt wird, ob das Gespräch und somit die Kommunikationswiedergabe beendet werden soll.

Bei einem "Nein" N und somit bei einer Verneinung der weiteren Abfrage 64 wird das die als elektronische Recheneinrichtung ausgebildete erste Steuereinrichtung 44 wieder mit dem Erfassen von Daten und/oder Informationen und/oder Parameter über eine Schleife 66 beauftragt, um eine erneute Geräuschreduzierung in die Umgebung 26 zu ermöglichen, welche in einem vorgegebenen Zeitintervall wiederholt werden kann. Bei einem "Ja" J und somit bei einer Bestätigung der weiteren Abfrage 64 wird über eine zweite Schleife 58 das Verfahren wieder bei Start 36 von neuem angefangen.

Insbesondere ist zum Betreiben des Verfahrens die Freisprecheinrichtung 12 für den Kraftwagen 10 mit der elektronisch gekoppelten Steuereinrichtung 16 zur Steuerung einer Kommunikationswiedergabe zwischen der Freisprecheinrichtung 12 und dem Nutzer 14 vorgesehen, welche wiederum dazu ausgebildet ist, eine Vielzahl von mit der Freisprecheinrichtung 10 elektronisch gekoppelten Lautsprechern 18 und jeweilige Lautstärken der von den jeweiligen Lautsprechern 18 ausgehenden Schallsignalen 20 für die Kommunikationswiedergabe wenigstens teilweise zu steuern. Dabei sind mittels wenigstens der mit der Freisprecheinrichtung 12 elektronisch gekoppelten ersten Erfassungseinrichtung 22 Parameter zur Ermittlung eines Fahrzeugnutzungskontexts erfassbar und mittels wenigstens der mit der Freisprecheinrichtung 12 elektronisch gekoppelten zweiten Erfassungseinrichtung 30 und in Abhängigkeit von den Parametern des Fahrzeugnutzungskontexts die Person 24 in der Umgebung 26 des Kraftwagens 10 erfassbar sowie die Position 32 der Person 24 relativ zum Kraftwagen 10. Auch mittels der Steuereinrichtung 16 und in Abhängigkeit von der Position 32 sind die Lautstärke der von den Lautsprechern 18 ausgehenden und wenigstens teilweise an die Position 32 der Person 24 gerichteten Schallsignale 20 so reduzierbar, dass eine Geräuschreduzierung in die Umgebung 26 ermöglicht wird.

In nochmal anderen Worten werden in den Figuren 1 bis 5 insbesondere drei technische Umsetzungen zum Verhindern oder zumindest zur Reduktion der Sprachverständlichkeit außerhalb des Kraftwagens 10 beschrieben, welche ein Mithören eines Gespräches eines Nutzers 14 erheblich erschweren und welche einzeln oder auch in Kombination ausgeführt werden können.

Hierbei kann in einer ersten Umsetzung das Telefonat über die Freisprecheinrichtung 12 mittels einem verbauten Beschallungssystem im Kraftwagen 10 dergestalt kontextabhängig wiedergegeben werden, sodass die Privatsphäre des Nutzers 14 gesteigert wird, ohne die Qualität der Sprachwiedergabe besonders zu vermindern. Hierzu werden die Lautsprecher 18 bei der Sprachwiedergabe kontextabhängig angesteuert, so wie in der Fig. 2 und im Ablaufdiagram der Fig. 4 dargestellt.

So kann beispielsweise der linke Lautsprecher 18 die Wiedergabe übernehmen, wenn sich eine Person 24 rechts vom Kraftwagen 10 befindet. Bewegt sich die Person 24 von rechts hinten nach links vorne so kann die Ansteuerung der Lautsprecher 18 graduell und auf die Trajektorie der Person 24 abgestimmt von links vorne nach rechts hinten im Kraftwagen 10 erfolgen. Dieser Effekt kann durch die Nutzung von speziellen 3D-Audio Wiedergabeformaten gesteigert werden. Des Weiteren kann die Lautstärke des Schallsignals 20 beziehungsweise des Audiosignals und das resultierende Überstrahlen temporär reduziert werden, wenn sich die Person 24 unmittelbar neben dem Kraftwagen 10 aufhält.

In einer zweiten Umsetzung kann durch "pitch-shifting" (gleichmäßige Änderung aller Frequenzen) oder "pitch correction" (verschiedene frequenzabhängige Änderungen) Schallsignals 20 beziehungsweise des Audiosignals oder durch das alternative oder zusätzliche Verwenden eines Equalizers (Kombination von Hoch- und Tiefpassfiltern) zur Filterung des Schallsignals 20 beziehungsweise des Audiosignals die frequenzabhängige Schallisolationscharakteristik des Kraftwagens 10, die sich im Allgemeinen zwischen Kraftwagentypen und Ausstattungsmerkmalen unterscheiden kann, ausgenutzt werden, um eine Güte des Sprachsignals in der Umgebung 26 des Kraftwagens 10 zu reduzieren.

Insbesondere bei einem Anheben der tiefen Frequenzen des Schallsignals 20 beziehungsweise des Audiosignals kommt es zu einem Wettbewerb zwischen zwei verschiedenen entgegenwirkenden Effekten. Zum einen kann ausgenutzt werden, dass im Allgemeinen höhere Frequenzen stärker vom Innenraum des Kraftwagen 10 gedämpft werden als tiefe Frequenzen, sodass ein gleichmäßiges Anheben dieser Frequenzen zu einer Steigerung der relativen Schallisolation führen kann. Zum andern können allerdings je nach Klangcharakter des Schallsignals 20 beziehungsweise des Sprachsignals tiefe resonante Frequenzen auftreten, welche zumeist subtil und nach der Frequenzanhebung wesentlich lauter wahrgenommen werden. Somit würden die frequenzangehobenen tieferen resonanten Frequenzen die empfundene Sprachverständlichkeit außerhalb des Kraftwagens 10 besonders nachteilig steigern.

Bei entsprechendem Klangcharakter ohne tiefe Resonanzfrequenzen des Schallsignals 20 beziehungsweise des Sprachsignals kann somit bei einem jüngeren Nutzer 14 die tiefen Frequenzen des Schallsignals 20 beziehungsweise des Audiosignals angehoben werden, wodurch die Schallisolation des Kraftwagens 10 aktiv verbessert wird ohne die empfundene Sprachverständlichkeit deutlich zu vermindern. Zudem kann aus den Nutzerprofilen über ein getragenes Hörgerät oder auf Basis von im Kraftwagen 10 durchgeführten Audiometrie erkannt werden, dass ein Anheben von tiefen Frequenzen nur in einem bestimmten Frequenzbereich möglich ist, ohne die Sprachverständlichkeit durch den Nutzer übermäßig zu vermindern.

Optional kann hierbei zum Verbessern des Sprachverständnisses die Änderung und/oder Verfremdung des Klangcharakters, beispielwiese bei Dialekten, Akzenten, usw. durch spezielle Codecs, welche die Sprache derartig pitchen und modifizieren können, kompensiert werden, sodass der ursprüngliche Klangcharakter erhalten oder zusätzlich harmonisiert wird.

Bei einem alternativen alleinigen Absenken der tiefen Frequenzen des Schallsignals 20 beziehungsweise des Audiosignals wird das Sprachverständnis im Inneren des Kraftwagens 10 nur leicht reduziert, da die hochfrequenten Audiosignalanteile gut wahrgenommen werden können, während gerade diese hochfrequenten Schallsignalanteile beziehungsweise Audiosignalanteile durch die Schallisolation des Kraftwagens 10 in der unmittelbaren Umgebung 26 des Kraftwagens 10 gedämpft werden.

Eine Regelungsstrategie des "pitch-shiftings" oder der "pitch correction" ist entsprechend von der frequenzabhängigen Schallisolationscharakteristik des Kraftwagens 10, welche relativ zur Beschallungsanlage im Kraftwageninnenraum und Messposition relativ zum Kraftwagen 10 variiert, sowie von den Klangcharakteren des reproduzierten Sprachsignals eines Telefonates, abhängig. Die frequenz- und richtungsabhängige Schallisolationscharakteristik kann während der Entwicklung des Kraftwagens 10 akustisch vermessen werden und die Klangcharakteristiken durch digitale Audiosignalverarbeitung in Echtzeit aus dem Sprachsignal bestimmt werden.

In einer dritten Umsetzung kann durch das Nutzen der Außenmikrophone 30a am Kraftwagen 10 die Schallsignale 20 beziehungsweise die Audiosignale dergestalt modifiziert werden, sodass die Schallsignale 20 beziehungsweise die Audiosignale, besonders Sprache, im Kraftwageninnenraum mit bestmöglicher und in der Umgebung 26 des Kraftwagens 10 verminderter Sprachverständlichkeit wahrgenommen werden. Hierzu können unterschwelligen STIPA-Testsignale oder Methoden der natürlichen Sprachverarbeitung (NLP) verwendet werden, um Sprachinhalte beispielsweise automatisch in Text zu überführen.

Wird kein Testsignal verwendet, kann ein allgemeiner Güteunterschied dG der Sprachverständlichkeit zwischen Innenraum und Umgebung 26 des Kraftwagens 10 ermittelt werden, indem die Güte der Sprachverständlichkeit jeweils im Innen- Gl und im Außenraum GA gemessen/ermittelt/quantifiziert wird und das Verhältnis, insbesondere ein Quotient der beiden Werte dG=GA/GI ermittelt wird.

Wird die gleiche Methode zur Gütebestimmung der Sprachverständlichkeit auf die im Kraftwagen 10 wiedergegebenen Schallsignale 20 beziehungsweise der Audiosignale und dem in der Umgebung 26 des Kraftwagens 10 aufgezeichneten Schallsignalen 20 beziehungsweise Audiosignalen oder aus den gleichzeitig von Innen- und Außenmikrophonen 22a, 30a aufgezeichneten Audioinformationen angewandt, so können die jeweiligen Güten der Sprachverständlichkeit ermittelt/quantifiziert und verglichen werden.

Beispielsweise kann die Güte des Sprachverständnisses aus einer automatischen Transkription des Gespräches mittels NLP Methoden ermittelt werden. Hierbei kann also gleichsam die Sprachwiedergabe im Kraftwagen 10 so verbessert werden, dass die Transkription in der Umgebung maximal schlecht und im Inneren maximal gut ist, beziehungsweise eine Gewichtung zwischen den beiden Extremen erzielt wird. So könnte beispielsweise das Verständnis des Gesprächs im Inneren Gl stärker gewichtet sein, als das schlechte Verständnis in der Umgebung GA, beispielsweise dG = GA / GI^alpha, o.ä.

Die Güte eines automatischen Transkripts kann quantifiziert werden, indem zum Beispiel eine Statistik über die Wahrscheinlichkeiten für das eindeutige Erkennen jeden einzelnen Wortes erstellt wird. Dies ergibt einen Wert GI für die im Inneren des Kraftwagens 10 quantifizierte Sprachverständigkeit. Gleichzeitig wird die Sprachverständigkeit außerhalb des Kraftwagens 10 GA mittels Außenmikrophone 30a ermittelt. Die Werte von Gl und GA oder daraus ermittelte Werte wie beispielsweise das Verhältnis von Gl zu GA wird der Steuereinrichtung 16 übermittelt, welche daraufhin die Lautsprecheransteuerung, das heißt das erzeugte Schallsignal 20 beziehungsweise das Audiosignal, dergestalt ändert, dass der Gesprächsinhalt im Inneren des Kraftwagens 10 maximal gut und in der Umgebung 26 des Kraftwagens 10 minimal gut erkannt werden kann, beispielsweise könnte hierfür der Quotient GA/GI mit aus dem Stand der Technik bekannten Optimierungsmethoden minimiert werden, wie in der Fig. 3 dargestellt.

Bei einem Kraftwagen 10 kann es sich auch im Allgemeinen um jedwedes Gefährt zu Lande, zu Wasser und in der Luft handeln. Bei dem Kraftwagen 10 kann es sich somit um (Straßen-) Kraftwagen 10, etwa ein Personenkraftwagen oder ein Lastkraftwagen oder ein Bus aber auch ein Luftfahrzeug, ein Wasserfahrzeug, ein Einsatzfahrzeug 10, eine Baumaschine, ein landwirtschaftliches oder ein militärisches Fahrzeug 10 handeln. Insbesondere kann es sich auch um ein schienengebundenes Fahrzeug, etwa ein Zug, Schwebebahn, Magnetschwebebahn oder um eine in einer weitgehend luftleeren Röhre auf Luftkissen gleitende oder aufgrund magnetischer Kräfte schwebende Kapsel handeln. Bei dem Nutzer 14 kann es sich um jede Person im Kraftwagen 10 handeln, also beispielsweise den Fahrer, den Beifahrer oder weitere Personen in einem zur Beförderung von Personen vorgesehenen Verkehrsmittel handeln.

Weiterhin kann die vorab beschriebene automatische Verbesserung des Schallsignals 20 beziehungsweise des Audiosignals zusätzlich vom Kraftwagennutzungs- und Mithörerkontext sowie erkannten Personen 24 in der Umgebung 26 des Kraftwagens 10 abhängig sein. Hierzu werden mehrere an unterschiedlichen Orten außerhalb des Kraftwagens 10 befindliche Mikrophone verwendet, um die Güte des Erkennens des Gesprächsinhalts durch Audiosignalveränderung für die den Personen 24 am nächste gelegenen Außenmikrophone 30a zu reduzieren, sowie im Ablaufdiagram der Fig. 5 dargestellt.

Weitehirn steht ein vergleichsweise wertanmutendes Luxusfahrzeug an einer roten Ampel und der Fahrer des vergleichsweise wertanmutenden Luxusfahrzeugs führt ein geschäftliches Gespräch, welches insbesondere vertrauliche oder geheime Informationen enthalten kann. Der gegenwärtige Kraftwagennutzungskontext (stehendes Kraftwagen 10) und der potenzielle Mithörkontext (städtischer Bereich mit hoher Bevölkerungsdichte) ermitteln einen erhöhten Bedarf, dass die Wiedergabe des Telefongespräches mittels der im Kraftwagen 10 verbauten Beschallungseinrichtung derart zu modifizieren ist, sodass die Privatsphäre der Nutzer 14 bestmöglich geschützt wird. Hierzu werden zunächst die tiefen Frequenzen des Schallsignals 20 beziehungsweise des Audiosignals abgesenkt. Da der Nutzer 14 des Kraftwagens 10 auf Basis des hinterlegten Nutzerprofils und/oder Innenraumkamerabildern, welche mittels Methoden des computergestützten Sehens ausgewertet wurden, als relative jung erkannt wird, wird dessen Sprachverständnis im Inneren des Kraftwagens 10 nur leicht oder nicht reduziert, da die hochfrequenten Audiosignalanteile vom Nutzer 14 weiterhin gut wahrgenommen werden können.

Zusätzlich werden mittels eines Vergleichs der inneren und äußeren Sprachverständlichkeiten, welche auf Basis von Innen- und Außenmikrophonaufnahmen und einer Quantifizierung der Güte Sprachverständlichkeit erfolgt, die Eigenschaften der Wiedergabe des Audiosignals dergestalt optimiert, sodass die Schallsignale 20 beziehungsweise die Audiosignale, besonders Sprache, im Kraftwageninnenraum mit bestmöglicher und in der Umgebung des Kraftwagens 10 verminderter Sprachverständlichkeit wahrgenommen werden. Das Optimum der Wiedergabeparameter kann beispielsweise von den Klangcharakteristiken des Nutzers 14 und der weiteren am Telefonat beteiligten Person abhängig sein. Tritt nun eine Person 24 neben das Kraftwagen 10, wird dies von den Kraftwagensensoren erkannt und des Weiteren die Position des Kraftwagens 10 sowie seine Trajektorie relativ zu diesem bestimmt. Auf Basis dieser Informationen können die Lautsprecher 18 im Inneren derart gesteuert werden, dass die Abstrahlung des Schallsignals 20 in Richtung dieser Person 24 weiter reduziert wird.

In anderen Worten beschreibt die Erfindung eine kontextabhängige Steuerung der Kommunikationswiedergabe in einem Fahrzeug zum Schutz der Privatsphäre.

## Patentansprüche

1. Verfahren zur Steuerung einer Kommunikationswiedergabe zwischen einer Freisprecheinrichtung (12) in einem Kraftwagen (10) und einem Nutzer (14), bei welchem für die Kommunikationswiedergabe mittels einer mit der Freisprecheinrichtung (12) elektronisch gekoppelten Steuereinrichtung (16) wenigstens ein mit der Freisprecheinrichtung (12) elektronisch gekoppelter Lautsprecher (18) gesteuert und/oder wenigstens ein von diesem wenigstens einem Lautsprecher (18) ausgehender Schallsignal (20) wenigstens teilweise geändert werden, mit den Verfahrensschritten:
- Erfassen von Parameter zur Ermittlung eines Fahrzeugnutzungskontexts mittels wenigstens einer mit der Freisprecheinrichtung (12) elektronisch gekoppelten ersten Erfassungseinrichtung (22)
- Erfassen von einer Person (24) in einer Umgebung (26) des Kraftwagens (10) mittels wenigstens einer mit der Freisprecheinrichtung (12) elektronisch gekoppelten zweiten Erfassungseinrichtung (30);
- Erfassen einer Position (32) der Person (24) relativ zum Kraftwagen (10);
**dadurch gekennzeichnet, dass**
während eines Telefonats über die Freisprecheinrichtung (12) die Person (24) in der Umgebung (26) des Kraftwagens (10) in Abhängigkeit von den Parametern des Fahrzeugnutzungskontexts erfasst wird und in Abhängigkeit von der erfassten Position (32) der Person (24) eine Lautstärke und/oder einer Güte einer Sprachverständlichkeit des von dem wenigstens einen Lautsprecher (18) ausgehenden und wenigstens teilweise an die Position (32) der Person (24) gerichteten Schallsignals (20) mittels der Steuereinrichtung (16) geändert wird.

2. Verfahren nach Anspruch 1,
**dadurch gekennzeichnet, dass**
die erste Erfassungseinrichtung (22) als optische Erfassungseinrichtung und/oder die zweite Erfassungseinrichtung (30) als optische Erfassungseinrichtung bereitgestellt werden.

3. Verfahren nach Anspruch 1 oder 2,
**dadurch gekennzeichnet, dass**
die erste Erfassungseinrichtung (22) als Sensoreinrichtung und/oder die zweite Erfassungseinrichtung (30) als Sensoreinrichtung bereitgestellt werden.

4. Verfahren nach einem der vorhergehenden Ansprüche,
**dadurch gekennzeichnet, dass**
mittels der zweiten Erfassungseinrichtung (30) eine Trajektorie aus einer Positionsänderung einer Person (24) in der Umgebung (26) des Kraftwagens (10) erfasst wird.

5. Verfahren nach einem der vorhergehenden Ansprüche,
**dadurch gekennzeichnet, dass**
die Steuereinrichtung (16) mit einem Datenzentrum (34) kabellos gekoppelt wird.

6. Verfahren nach einem der vorhergehenden Ansprüche,
**dadurch gekennzeichnet, dass**
mittels einer dritten Erfassungseinrichtung (36) eine weitere Lautstärke und/oder eine weitere Güte der Sprachverständlichkeit in der Umgebung (26) des Kraftwagens (10) erfasst wird.

7. Verfahren nach Anspruch 6,
**dadurch gekennzeichnet, dass**
die Schallsignale (20) in Abhängigkeit von der erfassten weiteren Lautstärke und/oder der erfassten weiteren Güte der Sprachverständlichkeit in der Umgebung (26) des Kraftwagens (10) mittel der Steuereinrichtung (16) wenigstens teilweise geändert werden.

8. Verfahren nach einem der vorhergehenden Ansprüche,
**dadurch gekennzeichnet, dass**
mittels einer vierten Erfassungseinrichtung (38) individuelle Nutzer (14) erfasst werden.

9. Verfahren nach Anspruch 8,
**dadurch gekennzeichnet, dass**
die Schallsignale (20) in Abhängigkeit von Daten des erfassten individuellen Nutzers (14) mittel der Steuereinrichtung (16) wenigstens teilweise gesteuert werden.

10. Freisprecheinrichtung (12) für einen Kraftwagen (10) mit einer elektronische gekoppelten Steuereinrichtung (16) zur Steuerung einer Kommunikationswiedergabe zwischen der Freisprecheinrichtung (12) und einem Nutzer (14), welche wiederum dazu ausgebildet ist, eine Vielzahl von mit der Freisprecheinrichtung (12) elektronisch gekoppelten Lautsprechern (18) und jeweilige Lautstärken der von den jeweiligen Lautsprechern (18) ausgehenden Schallsignale (20) für die Kommunikationswiedergabe wenigstens teilweise zu steuern, wobei mittels wenigstens einer mit der Freisprecheinrichtung (12) elektronisch gekoppelten ersten Erfassungseinrichtung (22) Parameter zur Ermittlung eines Fahrzeugnutzungskontexts erfassbar sind und mittels wenigstens einer mit der Freisprecheinrichtung (12) elektronisch gekoppelten zweiten Erfassungseinrichtung (30) eine Person (24) in einer Umgebung (26) des Kraftwagens (10) und eine Position (32) der Person (24) relativ zum Kraftwagen (10) erfassbar ist,
**dadurch gekennzeichnet, dass**
während eines Telefonats mittels der Freisprecheinrichtung (12) mittels der zweiten Erfassungseinrichtung (30) und in Abhängigkeit von den Parametern des Fahrzeugnutzungskontexts die Person (24) in der Umgebung (26) des Kraftwagens (10) erfassbar ist und in Abhängigkeit von der Position (32) der Person (24) die Lautstärke der von den Lautsprechern (18) ausgehenden und wenigstens teilweise an die Position (32) der Person (24) gerichteten Schallsignale reduzierbar sind.

## Claims

1. Method for controlling communication reproduction between a hands-free device (12) in a motor vehicle (10) and a user (14), in which, for the communication reproduction, at least one loudspeaker (18) electronically coupled to the hands-free device (12) is controlled by means of a control device (16) electronically coupled to the hands-free device (12), and/or at least one sound signal (20) emanating from this at least one loudspeaker (18) is at least partially changed, comprising the method steps of:
- detecting parameters for determining a vehicle usage context by means of at least one first detection device (22) electronically coupled to the hands-free device (12)
- detecting a person (24) in an environment (26) of the motor vehicle (10) by means of at least one second detection device (30) electronically coupled to the hands-free device (12);
- detecting a position (32) of the person (24) relative to the motor vehicle (10); **characterized in that**
during a telephone call via the hands-free device (12), the person (24) in the environment (26) of the motor vehicle (10) is detected on the basis of the parameters of the vehicle usage context and, on the basis of the detected position (32) of the person (24), a volume and/or a quality of speech intelligibility of the sound signal (20) emanating from the at least one loudspeaker (18) and at least partially directed to the position (32) of the person (24) is changed by means of the control device (16).

2. Method according to claim 1,
**characterized in that**
the first detection device (22) is provided as an optical detection device and/or the second detection device (30) is provided as an optical detection device.

3. Method according to claim 1 or 2,
**characterized in that**
the first detection device (22) is provided as a sensor device and/or the second detection device (30) is provided as a sensor device.

4. Method according to any of the preceding claims,
**characterized in that**
a trajectory from a change in position of a person (24) in the environment (26) of the motor vehicle (10) is detected by means of the second detection device (30).

5. Method according to any of the preceding claims,
**characterized in that**
the control device (16) is wirelessly coupled to a data center (34).

6. Method according to any of the preceding claims,
**characterized in that**
by means of a third detection device (36) a further volume and/or a further quality of speech intelligibility in the environment (26) of the motor vehicle (10) is detected.

7. Method according to claim 6,
**characterized in that**
the sound signals (20) are at least partially changed by means of the control device (16) on the basis of the detected further volume and/or the detected further quality of speech intelligibility in the environment (26) of the motor vehicle (10).

8. Method according to any of the preceding claims,
**characterized in that**
individual users (14) are detected by means of a fourth detection device (38).

9. Method according to claim 8,
**characterized in that**
the sound signals (20) are at least partially controlled by means of the control device (16) on the basis of data of the detected individual user (14).

10. Hands-free device (12) for a motor vehicle (10) with an electronically coupled control device (16) for controlling communication reproduction between the hands-free device (12) and a user (14), which control device is in turn designed to at least partially control a plurality of loudspeakers (18) electronically coupled to the hands-free device (12) and respective volumes of the sound signals (20) emanating from the respective loudspeakers (18) for the communication reproduction, wherein parameters for determining a vehicle usage context can be detected by means of at least one first detection device (22) electronically coupled to the hands-free device (12), and a person (24) in an environment (26) of the motor vehicle (10) and a position (32) of the person (24) relative to the motor vehicle (10) can be detected by means of at least one second detection device (30) electronically coupled to the hands-free device (12),
**characterized in that**
during a telephone call by means of the hands-free device (12), the person (24) in the environment (26) of the motor vehicle (10) can be detected by means of the second detection device (30) and on the basis of the parameters of the vehicle usage context and, on the basis of the position (32) of the person (24), the volumes of the sound signals emanating from the loudspeakers (18) and at least partially directed to the position (32) of the person (24) can be reduced.

## Revendications

1. Procédé permettant la commande d'une reproduction de communication entre un dispositif mains libres (12) dans un véhicule automobile (10) et un utilisateur (14), dans lequel, pour la reproduction de communication, à l'aide d'un dispositif de commande (16) couplé électroniquement au dispositif mains libres (12), au moins un haut-parleur (18) couplé électroniquement au dispositif mains libres (12) est commandé et/ou au moins un signal sonore (20) émis par ledit au moins un haut-parleur (18) est modifié au moins partiellement, comportant les étapes de procédé consistant à:
- détecter des paramètres pour la détermination d'un contexte d'utilisation de véhicule à l'aide d'au moins un premier dispositif de détection (22) couplé électroniquement au dispositif mains libres (12)
- détecter une personne (24) dans un environnement (26) du véhicule automobile (10) à l'aide d'au moins un deuxième dispositif de détection (30) couplé électroniquement au dispositif mains libres (12) ;
- détecter une position (32) de la personne (24) par rapport au véhicule automobile (10) ; **caractérisé en ce que**
pendant une conversation téléphonique par l'intermédiaire du dispositif mains libres (12), la personne (24) dans l'environnement (26) du véhicule automobile (10) est détectée en fonction des paramètres du contexte d'utilisation de véhicule et, en fonction de la position (32) détectée de la personne (24), un volume sonore et/ou une qualité d'une intelligibilité de la parole du signal sonore (20) émis par l'au moins un haut-parleur (18) et dirigé au moins partiellement vers la position (32) de la personne (24) est modifié(e) à l'aide du dispositif de commande (16).

2. Procédé selon la revendication 1,
**caractérisé en ce que**
le premier dispositif de détection (22) est fourni en tant que dispositif de détection optique et/ou le deuxième dispositif de détection (30) est fourni en tant que dispositif de détection optique.

3. Procédé selon la revendication 1 ou 2,
**caractérisé en ce que**
le premier dispositif de détection (22) est fourni en tant que dispositif de capteur et/ou le deuxième dispositif de détection (30) est fourni en tant que dispositif de capteur.

4. Procédé selon l'une des revendications précédentes,
**caractérisé en ce**
**qu'**à l'aide du deuxième dispositif de détection (30), une trajectoire est détectée à partir d'une modification de position d'une personne (24) dans l'environnement (26) du véhicule automobile (10).

5. Procédé selon l'une des revendications précédentes,
**caractérisé en ce que**
le dispositif de commande (16) est couplé sans fil à un centre de données (34).

6. Procédé selon l'une des revendications précédentes,
**caractérisé en ce**
**qu'**à l'aide d'un troisième dispositif de détection (36), un autre volume sonore et/ou une autre qualité de l'intelligibilité de la parole dans l'environnement (26) du véhicule automobile (10) est détecté(e).

7. Procédé selon la revendication 6,
**caractérisé en ce que**
les signaux sonores (20) sont modifiés au moins partiellement en fonction de l'autre volume détecté et/ou de l'autre qualité détectée de l'intelligibilité de la parole dans l'environnement (26) du véhicule automobile (10) à l'aide du dispositif de commande (16).

8. Procédé selon l'une des revendications précédentes,
**caractérisé en ce que**
des utilisateurs individuels (14) sont détectés à l'aide d'un quatrième dispositif de détection (38).

9. Procédé selon la revendication 8,
**caractérisé en ce que**
les signaux sonores (20) sont commandés au moins partiellement à l'aide du dispositif de commande (16) en fonction de données de l'utilisateur individuel (14) détecté.

10. Dispositif mains libres (12) pour un véhicule automobile (10) comportant un dispositif de commande (16) couplé électroniquement pour la commande d'une reproduction de communication entre le dispositif mains libres (12) et un utilisateur (14), qui est à son tour conçu pour commander au moins partiellement une pluralité de haut-parleurs (18) couplés électroniquement au dispositif mains libres (12) et des intensités sonores respectives des signaux sonores (20) émis par les haut-parleurs (18) respectifs pour la reproduction de communication, dans lequel, à l'aide d'au moins un premier dispositif de détection (22) couplé électroniquement au dispositif mains libres (12), des paramètres peuvent être détectés pour la détermination d'un contexte d'utilisation de véhicule et, à l'aide d'au moins un deuxième dispositif de détection (30) couplé électroniquement au dispositif mains libres (12), une personne (24) dans un environnement (26) du véhicule automobile (10) et une position (32) de la personne (24) par rapport au véhicule automobile (10) peuvent être détectées,
**caractérisé en ce que**
pendant une conversation téléphonique à l'aide du dispositif mains libres (12), à l'aide du deuxième dispositif de détection (30) et en fonction des paramètres du contexte d'utilisation de véhicule, la personne (24) peut être détectée dans l'environnement (26) du véhicule automobile (10) et, en fonction de la position (32) de la personne (24), l'intensité sonore des signaux sonores émis par les haut-parleurs (18) et dirigés au moins partiellement vers la position (32) de la personne (24) peut être réduite.
